# EUROPEAN PATENT SPECIFICATION

(11) **EP 1 134 881 B1**
(45) Date of publication and mention of the grant of the patent: **04.01.2006**
(21) Application number: 00830202.8
(22) Date of filing: 17.03.2000
(51) Int. Cl.: H02M 3/335

(54) **Self-recovering and self-disabling system for converter**
Selbstdeaktivierende und selbstreaktivierende Anordnung für Gleichstromwandler
Système auto-inhibant et auto-réactivant pour convertisseur

(43) Date of publication of application: 19.09.2001
(73) Proprietor: STMicroelectronics S.r.l., 20041 Agrate Brianza (Milano) (IT)
(72) Inventor: Gattavari, Giuseppe, 21052 Busto Arsizio (IT); Adragna, Claudio, 20052 Monza (IT); Fagnani, Mauro, 20014 Nerviano (IT)
(74) Representative: Pellegri, Alberto

(56) References cited:
- US-A- 5 083 254
- GOODENOUGH F: "OFF-LINE PWM SWITCHING REGULATOR IC HANDLESS 3 W" ELECTRONIC DESIGN,US,PENTON PUBLISHING, CLEVELAND, OH, vol. 38, no. 6, 22 March 1990 (1990-03-22), pages 35-36,38-39, XP000113698 ISSN: 0013-4872
- HAGEMAN S C: "IC EASES MONITORING OF DC-DC CONVERTERS" ELECTRONIC DESIGN,US,PENTON PUBLISHING, CLEVELAND, OH, vol. 40, no. 5, 5 March 1992 (1992-03-05), page 78 XP000297903 ISSN: 0013-4872

## Description

### FFELD OF THE INVENTION

The invention relates to AC-DC and DC-DC converters, voltage adapters, battery chargers and similar circuits whether or not functioning in switched mode.

### BACKGROUND OF THE INVENTION

In voltage adapters, battery chargers, power supplies that can be directly plugged into a mains outlet socket and more generally in DC-DC converters, with or without isolation, it is necessary to provide protection systems from short-circuits, over-voltages, over-temperatures, etc., in order to preserve the integrity of the integrated device (that commonly contains power supplying, driving and controlling circuitry of the converter), and/or of any other external component that must be protected, for example a power transistor, a transformer, a diode etc., Such protection functions are commonly realized by connecting external components to dedicated pins of the integrated circuit of the converter.

Commonly, a thermal protection is realized by using an active or passive component that is sensible to the temperature, suitably connected to one or more fixed or variable resistors or to another passive or active element that biases such an external temperature sensing line that is coupled to two dedicated pins of the integrated circuit. On a first pin is available a constant reference voltage, that can be generated by an integrated regulator, to which a terminal of the external line sensible to the temperature is connected, while another functional node of the sensing line is coupled to a second input pin of the integrated circuit to force the disabling of the power switch or of the power switches of the converter and thus to turn-off completely the converter when a certain maximum temperature is surpassed.

A drawback of these known systems is the inability of self-recovering when the temperature returns below the threshold value. This because the internally generated biasing voltage of the network detecting the temperature becomes null upon the turning-off of the whole integrated device placing the system in a latch condition. In order to restart it, the system must be momentarily disconnected from the mains.

In applications where this is unacceptable or inconvenient, an auxiliary power supply or voltage regulator is employed for generating a constant reference voltage with which to bias the sensing temperature line.

This approach is burdensome because of the extra cost of such an auxiliary supply circuit and it is in contrast with the most recent European Community rules on the limitation of energy absorption from the mains under no load conditions.

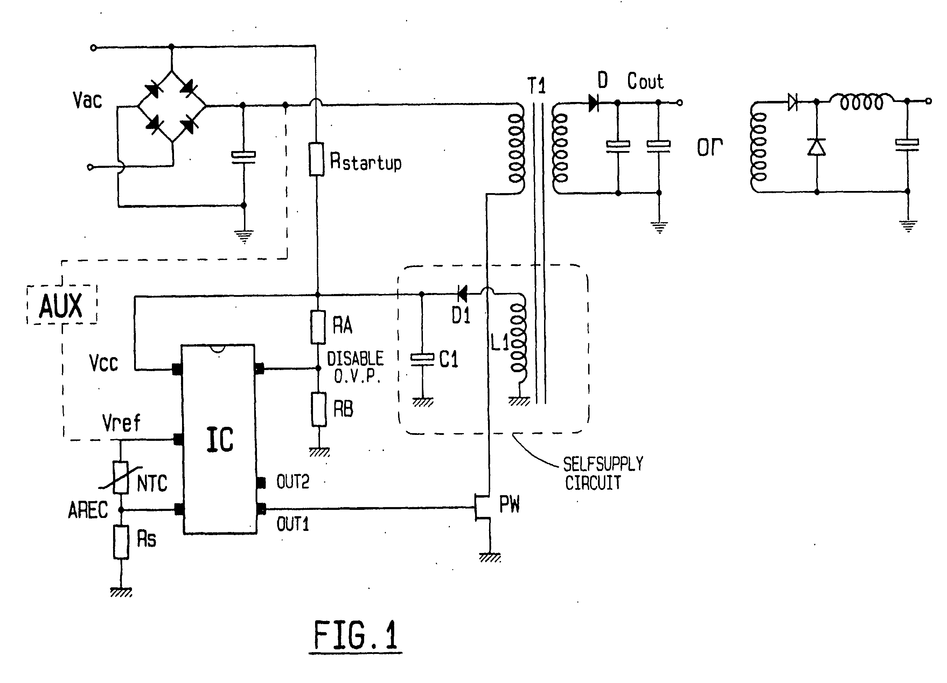

A diagram of a typical power supply that can be directly connected to a power outlet and employing a DC-DC converter with a transformer T1 provided with an auxiliary winding L1 for self-supplying the integrated circuit IC during normal operation of the converter, is depicted in Fig. 1. After the circuit has been started, the voltage induced on the auxiliary winding L1 is rectified by the diode D1 and filtered by the capacitor C1, thus providing a certain self-supplying voltage Vcc to the integrated circuit IC of the converter.

Start up takes place customarily by way of a start-up resistance Rstart-up (or an equivalent active component) that can be, as in the depicted example, directly coupled to the mains voltage, or to the output node of the rectifying bridge. Therefore on the Vcc node a suitably limited voltage is produced by way of the voltage divider of which Rstart-up is part and through a voltage regulator circuit, usually internal to the integrate circuit IC, the functional circuits of the integrated circuit are powered at a regulated supply voltage enabling and driving the switching of the power switch PW at a certain oscillating frequency starting up the DC-DC converter. Upon the starting of the oscillations, the voltage induced on the self-supply winding L1 that is the voltage Vcc, continue to power at a suitable level the IC ensuring at steady state conditions a correct functioning of the level IC.

Two typical protection networks are depicted in the diagram of Fig. 1.

Protection from overvoltages is implemented by the voltage divider RA, RB dimensioned such to disable the converter circuit when a certain maximum threshold voltage is surpassed (DISABLE signal). In order to restart the converter it is necessary to unplug it from the mains and to reconnect it.

As shown, the thermal protection line may be typically constituted by an active or passive component sensible to the temperature, in the example shown, a nonlinear resistor with a negative temperature coefficient (NTC) and by a series resistor Rs. A second resistor can optionally be connected in series between the NTC and Rs to make easier the fixing of a desired threshold temperature.

As discussed above, the temperature detection line (NTC and Rs) is usually biased at an appropriate reference voltage that is internally generated by connecting the line to a dedicated pin, Vref, of the integrated circuit IC. Alternatively, where it is necessary to ensure a self-recovery function, the temperature sensing line is biased by an auxiliary regulator AUX, illustrated with dash lines, such to allow the self-recovery of an operative state by the system upon the returning of the temperature below the fixed threshold value.

The arresting of the converter in presence of an excessive temperature is ensured by suitably coupling the temperature detection line to a dedicated input pin A-REC of the integrated circuit IC, so that when the temperature threshold is surpassed any further switching of the power switch PW or of the switches in case of other configurations of the converter employing two or more switches is disabled and practically disabling of the whole integrated circuit is produced.

It is evident the need for a thermal protection system with self-recovery ability without requiring the use of an external auxiliary voltage regulator for biasing the external temperature sensing line.

On the other side there are numerous applications, as alarm and security or safety systems, whether remote or not, wherein it is required to switch off completely the power supply to the functional circuits of the particular system or of subsystems thereof, whenever a certain pre-established threshold of a physical quantity even other than the temperature, such as luminance, sound level, pressure, liquid head, presence of smoke and alike, which is typically represented in general terms by the change of the state of a sensor of a ON/OFF kind.

Even in those applications, the ability of self-recovering of the power supply by re-enabling the functioning of the converter when the alarm condition is no longer present can be necessary or advantageous.

The paper by Hageman S. C. "IC eases monitoring of DC-DC converters", Electronic Design, US, Penton Publishing, Cleveland, OH, Vol. 40, No. 5, 5 March 1992, page 78, XP000297903 ISSN: 0013-4872, discloses a monitor circuit for both brown-out detection and over-temperature sensing.

### OBJECT AND SUMMARY OF THE INVENTION

It has been found and is the object of the present invention, a self-disabling and self-recovering converter of a power supply upon reaching of a certain threshold value of a monitored electric or physical quantity, sensed by a specific sensor that advantageously uses as reference voltage for biasing the external line containing the sensor at the same regulated self-powering voltage during the start-up phase of the converter circuit.

In this way it is possible to ensure the availability of a voltage reference that is always present through the start-up circuit directly connected to the mains or rectifying bridge output, even while the integrated circuit of the converter is latched because of the switching of the sensor.

Practically the self-recovery function of the disabling circuit is ensured through even the converter circuit has been turned off bringing the entire power supply to very low consumption conditions, practically equivalent to the current consumption of the start-up circuit of the converter, plus the current consumption of the sensor line that can be made very low.

Substantially the disabling system with self -recovery ability of the invention comprises:
the regulator stage, which is commonly intrinsic to the start-up circuit of the device, a modifiable voltage clamp chain, that may be customarily realized with a number of Zener diodes or of equivalent devices, connected between the output node Vcc of the self-supply rectifying circuit and a common ground node of the circuit;
a divider of the regulated self-supply voltage;
an hysteresis comparator having an inverting input (-) coupled to a first node of the voltage divider and a second non inverting input (+) functionally connected to a pin of the IC device to which is coupled a functional node of an external sensing line of the physical or electrical quantity being monitored, the output of the comparator controlling a first hysteresis transistor, having its current terminals coupled to a second node of said voltage divider and to the common ground node, and a second transistor sectioning said clamp line by short-circuiting to ground when turned on a part of said Zener diodes or functionally equivalent devices that compose the clamp chain:
   at least a logic AND gate having an input functionally coupled through an inverting stage to the output of the hysteresis comparator and an output generating a disabling logic signal of all functional circuits of the comparator;
   the external sensor line being biased by connecting it through a dedicated pin of the integrated circuit of the comparator to said regulated self-supply voltage.

The invention is more precisely defined in the attached claims.

### BRIEF DESCRIPTION OF THE DRAWINGS

**Figure 1** is a diagram of two alternative topologies of a switching power supply directly connectable to the mains;
**Figure 2** is a diagram of other alternative topologies of a switching power supply directly connectable to the mains;
**Figure 3** is a functional diagram of the disabling circuit with self-recovery of the invention;
**Figure 4** shows how the circuit of the invention works.

### DESCRIPTION OF AN EMBODIMENT OF THE INVENTION

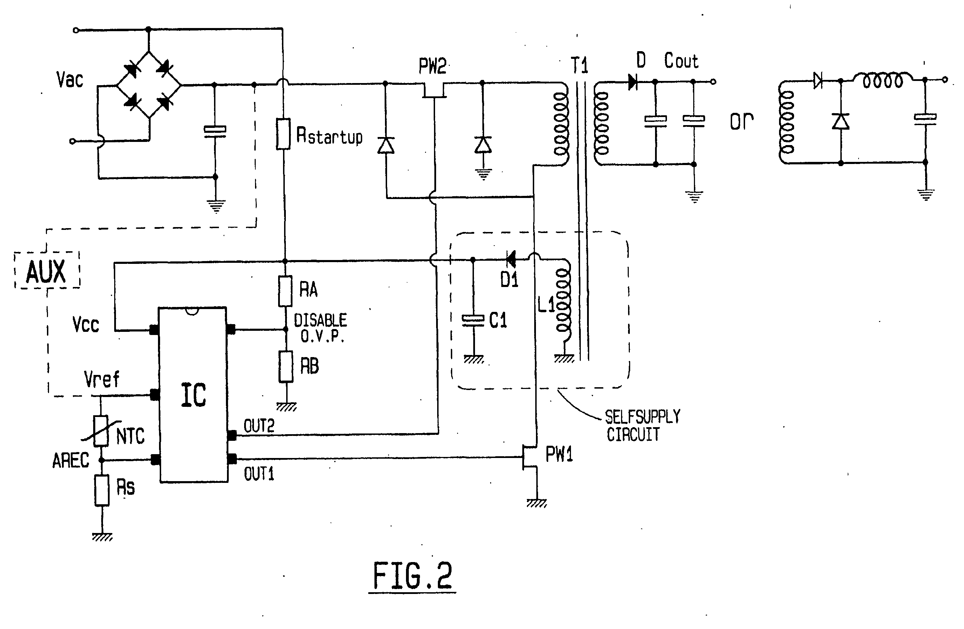

Commonly used topologies of the DC-DC converter of a switching power supply connectable to a power outlet socket are depicted in Figs. 1 and 2. A flyback converter (quasi-resonant) and its forward variant are depicted in Fig. 1. A flyback asymmetric half-bridge converter and its forward variant are depicted in Fig. 2. As it is well known to the skilled person, there are many other topologies such as full-bridge Push-Pull and Zero Voltage Switch (ZVS), full-bridge Push-Pull and phase shift etc.. In all these cases, a commercially available integrated circuit IC is normally used containing all the driving, controlling and protecting circuitry of the converter. To dedicated pins of the IC are connected the external power components, configuration components, programming components and eventual sensor lines to implement self-disabling functions.

By way of example, the invention will be illustrated in detail by referring to the realization of a switching power supply for direct connection to the mains and in which a disabling function with self-recovery is implemented without using any auxiliary supply AUX, as depicted in Figs. 1 and 2 by phantom (dash) lines.

Also by way of example, a physical quantity to be monitored is the temperature and the sensor used is, as illustrated, a non linear resistance with a negative temperature coefficient NTC (naturally the triggering function can be inverted if required by inverting the position of NTC and Rs in the sensing line).

More generally, the sensor used will be chosen in function of the quantity to be detected and instead of a negative temperature coefficient resistor, a positive coefficient resistor, a bimetal switch, a thermocouple, a microswitch, a fotoresistance, a fototransistor, a gas or vapour detector, a sound detector or any other device suitable to detect the surpassing of a certain pre-established threshold value by the physical or electrical quantity to be monitored may be used.

According to the application examples illustrated in Figs. 1 and 2, the thermo-sensible element NTC decreases its resistance value when the temperature increases such that the voltage on the pin A-REC of the integrated circuit IC that contains the circuitry of the converter increases proportionally with the detected temperature. When the voltage on the functional node of the temperature sensing line constituted by the NTC and by the resistor Rs reaches a certain pre-established threshold, a circuit of the IC disables the converter circuit, obviously arresting any further switching on of the power switch PW.

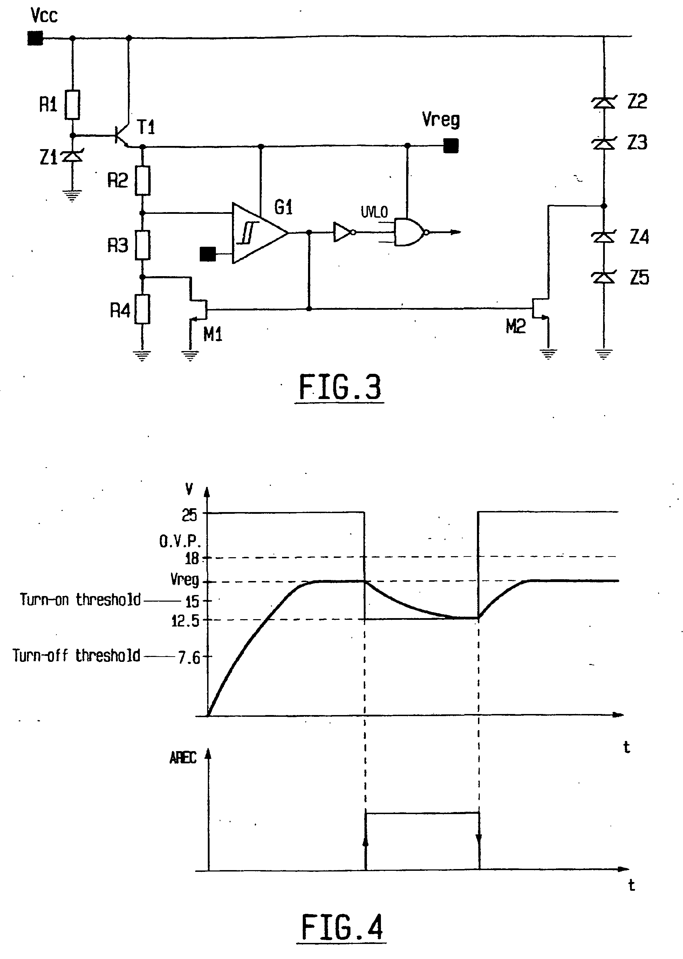

The self-recovery circuit of the invention is depicted in Fig. 3 and can be integrated in any commercial IC converter device.

The circuit diagram of Fig. 3 includes also the voltage regulator circuit constituted by R1, Z1 and T1 that is generally already present in the known ICs. The integrated voltage regulator is functionally coupled through a dedicated pin to the voltage Vcc that is produced by the external self-supply circuit constituted by C1, D1 and L1. It regulates the supply voltage of the integrated circuit to a certain relatively stable value, Vreg, commonly equal to 5V.

According to this invention, such a self-supply regulated voltage Vreg of the integrated circuit is made available outside, as depicted, through the pin Vreg to which the temperature sensing line, in the example shown constituted by NTC and Rs (functionally analogous to the diagram of Fig. 1); is connected.

The thermal hysteresis is established in this case by the ratio of the resistances of the NTC sensor and of the series resistor Rs, and by the hysteresis of the comparator G 1.

The comparator G1 has a non-inverting input (+) coupled to the temperature control pin A-REC, while the other inverting input (-) of the comparator G1 is biased at a certain threshold voltage, referred to the regulated supply voltage itself and obtained by a resistive partition of the regulated supply voltage Vreg, using the voltage divider constituted by R2, R3 and R4.

A certain hysteresis is imposed to the comparator G1, by using an hysteresis transistor M1 controlled by the output of the comparator and whose current terminals are coupled to a second tap of the voltage divider and to the common ground node of the circuit, respectively.

The non-inverting input of the comparator G1 can be biased, for example, to a voltage of about 2.7V through the voltage divider R2, R3 and R4, such that when the voltage on the pin A-REC rises above such a threshold voltage of 2.7 V. the comparator will switch. When the voltage on the pin A-REC coupled to the intermediate node of the external temperature sensing line, surpasses the reference threshold established by connecting the inventing input (-) of the comparator to a first tap of the voltage divider of the regulated supply voltage Vreg, the comparator output switches disabling all the functional circuits of the converter, except the so-called UVLO circuit (Under Voltage Lock Out), i.e. the start-up circuit. This brings the power supply circuit to a state of low current absorption.

The disabling of the converter circuit is executed by a logic command output by a logic NAND gate to an input of which is functionally coupled, in the illustrated example by way of an inverting stage, the output of the comparator G1.

Practically any other eventual disabling commands generated by other protections such as for example the signal DISABLE that is produced by an overvoltage sensing line, can be applied to dedicated inputs of the logic NAND gate.

In order to prevent that other disabling commands produced by different sensors do not interfere with the self-recovery functionality, the voltage on the node Vcc, which commonly may be clamped (limited) to a value of about 25V, is automatically reduced to a markedly lower limit value, for example to about 12.5V, by short-circuiting with a transistor M2, controlled from the comparator output G1, two of four Zener diodes that, in the illustrated example, compose the voltage clamp chain of the Vcc node. In this way other disabling signals generated by protection devices different from the thermal protection of the circuit of the invention will not interfere with the self-recovery function.

Indeed, spurious interventions of the overvoltage protection line (OVP) will be effectively prevented.

The functioning of the self-recovery circuit of the example depicted in Fig. 3 is illustrated by the diagrams of Fig. 4, wherein the voltage levels of the different thresholds of the thermal and overvoltage protections are indicated.

The self-recovery function provided by the circuit of the invention can be exploited to implement a thermal protection of one or more components of the system, eventually programming both the turn-off temperature and the turn-on temperature for each component.

By using as a reference voltage the regulated self-supply voltage of the integrated device, the system will automatically restart after the temperature drops back below the pre-established maximum threshold value. Of course, the circuit of the invention may support visualization, for example by the use of a Led, of the switching of the thermal protection in order to readily ascertain the cause of the stoppage.

## Claims

1. A self-disabling and self-recovering system for a converter comprising an integrated circuit (IC) containing programming, driving, controlling and protecting circuitry of the converter circuit (D1, C1) powering said integrated circuit (IC) at a regulated voltage (Vreg), at least one external line and a sensor (NTC, Rs) connected thereto for an electrical or physical quantity to be monitored said at least one external line being biased to a reference voltage and being functionally coupled to a disable input pin (A-REC) of said integrated circuit (IC) when a certain threshold value is surpassed a hysteresis comparator (COMP), **characterized in that** it further comprises
a sectionable voltage clamp chain (Z2, Z3, Z4, Z5) connected between an output node (Vcc) of said circuit (D1, C1) and a common ground node of the circuit;
a voltage divider (R2, R3, R4) deriving a first voltage and second voltage from said regulated self-supply voltage (Vreg);
said hysteresis comparator (COMP) having an inverting input (-) coupled to said voltage divider for receiving said first voltage and a non-inverting input (+) coupled through said disable input pin to said at least one external line, the output of the comparator controlling a first hysteresis transistor (M1) having current terminals coupled to said second voltage and to said common ground node, respectively, and a second transistor (M2) sectioning said clamp chain by short-circuiting to ground part of its components (Z4, Z5);
at least a logic gate (NAND) having an input functionally coupled through an inverting stage to the output of said hysteresis comparator (COMP) and an output for providing a disabling logic command signal when the threshold is surpassed; said external sensor line being biased through a dedicated pin with said regulated voltage (Vreg).

2. The system of claim 1, **characterized in that** said sensor belongs to the group composed of non-linear resistors with negative temperature coefficient, resistors with positive temperature coefficient, bimetal switches, thermocouples, photoresistors, phototransistors, sound detectors, microswitches, smoke detectors, vapour or gas detectors.

3. The system of claim 1, **characterized in that** said converter implements a switched mode power supply directly connectable to mains and having a topology belonging to the group composed of quasi-resonant flyback converters, quasi-resonant forward converters, half-bridge asymmetric flyback converters, forward half-bridge asymmetric converters, full-bridge phase shift push-pull converters, full-bridge zero voltage switch push-pull converters.

4. A method of disabling in a self-recoverable manner a converter comprising an integrated circuit (IC) containing programming, driving, controlling and protecting circuitry of the converter, circuit (D1, C1) powering said integrated circuit (IC) at a regulated voltage (Vreg), at least one external line and a sensor (NTC,Rs) connected thereto for an electrical or physical quantity to be monitored said at least one external line being monitored to a reference voltage and functionally coupled to a disable input pin (A-REC) of said integrated circuit (IC) when a certain threshold value is surpassed a histeresis comparator (COMP), consisting in
using said regulated voltage (Vreg) of the converter as biasing voltage of said external sensor line of the electrical or physical quantity to be monitored and as reference voltage of said hysteresis comparator monitoring the signal representing said monitored quantity produced by said external sensor line;
upon the switching of said comparator disabling the converter (IC) and reducing the limit value of voltage (Vcc) output by said circuit (D1, C1) self-supplying the converter circuit (IC) by short-circuiting to ground a portion (Z4, Z5) of a sectionable voltage clamp chain (Z2, Z3, Z4, Z5) connected to the output (Vcc) of said circuit (D1, C1) and to a I common ground node of the circuit.

## Patentansprüche

1. Selbstsperrendes und selbstrückstellendes System für einen Wandler, der eine integrierte Schaltung (IC), die einen Programmierungs-, Treiber-, Steuer-und Schutzschaltungskomplex des Wandlers enthält, eine Schaltung (D1, C1), die die integrierte Schaltung (IC) mit einer geregelten Spannung (Vreg) versorgt, mindestens eine äußere Leitung und einen damit verbundenen Sensor (NTC, Rs) für eine elektrische oder physikalische Quantität, die überwacht werden soll, wobei die mindestens eine äußere Leitung auf eine Bezugsspannung vorgespannt ist und funktionell mit einem Sperreingangsstift (A-REC) der integrierten Schaltung (IC) gekoppelt ist, wenn ein bestimmter Schwellenwert überschritten wird, und einen Hysteresekomparator (COMP) aufweist, **dadurch gekennzeichnet, daß** sie ferner aufweist
eine unterteilbare Spannungsklemmungskette (Z2, Z3, Z4, Z5), die zwischen einem Ausgangsknoten (Vcc) der Schaltung (D1, C1) und einem gemeinsamen Masseknoten der Schaltung geschaltet ist;
einen Spannungsteiler (R2, R3, R4), der eine erste Spannung und eine zweite Spannung aus der geregelten Spannung (Vreg) ableitet;
wobei der Hysteresekomparator (COMP) einen invertierenden Eingang (-), der an den Spannungsteiler zum Empfangen der ersten Spannung gekoppelt ist, und einen nicht-invertierenden Eingang (+) aufweist, der durch den Sperreingangsstift mit der mindestens einen äußeren Leitung gekoppelt ist, wobei der Ausgang des Komparators einen ersten Hysteresetransistor (M1), dessen Stromanschlüsse mit der zweiten Spannung bzw. mit dem gemeinsamen Masseknoten gekoppelt sind, und einen zweiten Transistor (M2) steuert, der die Klemmungskette durch Kurzschließen mit Masse eines Teils ihrer Komponenten (Z4, Z5) aufteilt;
mindestens ein Logikglied (NAND), das einen Eingang, der funktionell durch eine invertierenden Stufe mit dem Ausgang des Hysteresekomparators (COMP) gekoppelt ist, und einen Ausgang zur Bereitstellung eines sperrenden logischen Befehlssignals aufweist, wenn die Schwelle überschritten wird;
wobei die äußere Sensorleitung durch einen zweckbestimmten Stift mit der geregelten Spannung (Vreg) vorgespannt ist.

2. System nach Anspruch 1, **dadurch gekennzeichnet, daß** der Sensor zu der Gruppe gehört, die aus nichtinearen Widerständen mit einem negativen Temperaturkoeffizienten, Widerständen mit positiven Temperaturkoeffizienten, Bimetallschaltern, Thermoelementen, Photowiderständen, Phototransistoren, Schalldetektoren, Mikroschaltern, Rauchdetektoren, Dampf- oder Gasdetektoren besteht.

3. System nach Anspruch 1, **dadurch gekennzeichnet, daß** der Wandler eine Schaltbetriebsart-Stromversorgung implementiert, die direkt an Netzspannung anschließbar ist und eine Topologie aufweist, die zur Gruppe gehört, die aus Quasiresonanz-Sperrwandlem, Quasiresonanz-Durchlaßwandlern, asymmetrischen Halbbrücken-Sperrwandlern, asymmetrischen Halbbrücken-Durchlaßwandlem, Vollbrücken-Phasenschieber-Gegentaktwandlern, Vollbrücken-Nullspannungsschaltgegentaktwandlern besteht.

4. Verfahren zum Sperren in einer selbstwiederherstellbaren Weise eines Wandlers, der eine integrierte Schaltung (IC), die einen Programmierungs-, Treiber-, Steuer- und Schutzschaltungskomplex des Wandlers enthält, eine Schaltung (D1, C1), die die integrierte Schaltung (IC) mit einer geregelten Spannung (Vreg) versorgt, mindestens eine äußere Leitung und einen damit verbundenen Sensor (NTC, Rs) für eine elektrische oder physikalische Quantität, die überwacht werden soll, wobei die mindestens eine äußere Leitung auf eine Bezugsspannung vorgespannt ist und funktionell mit einem Sperreingangsstift (A-REC) der integrierten Schaltung (IC) gekoppelt ist, wenn ein bestimmter Schwellenwert überschritten wird, und einen Hysteresekomparator (COMP) aufweist, das besteht aus:
Verwenden der geregelten Spannung (Vreg) des Wandlers als Vorspannung der äußeren Sensorleitung der elektrischen oder physikalische Quantität, die überwacht werden soll, und als Bezugsspannung des Hysteresekomparators, der das Signal überwacht, das die überwachte Quantität repräsentiert, die durch die äußere Sensorleitung erzeugt wird;
beim Schalten des Komparators, Sperren des Wandlers (IC) und Reduzieren des Grenzwerts der Spannung (Vcc), die durch die Schaltung (D1, C1) abgegeben wird, Selbstversorgen der Wandlerschaltung (IC) durch Kurzschließen mit Masse eines Abschnitts (Z4, Z5) einer unterteilbaren Spannungsklemmungskette (Z2, Z3, Z4, Z5), die mit dem Ausgang (Vcc) der Schaltung (D1, C1) und einem gemeinsamen Masseknoten der Schaltung verbunden ist.

## Revendications

1. Système autodésactivable et autoréactivable pour un convertisseur comprenant un circuit intégré (IC) contenant des circuits de programmation, d'excitation, de commande et de protection du convertisseur, un circuit (D1, C1) alimentant le circuit intégré (IC) à une tension régulée (Vreg), au moins une ligne externe et un détecteur (NTC, Rs) connecté à celle-ci pour une quantité électrique ou physique à surveiller, ladite au moins une ligne externe étant polarisée à une tension de référence et étant fonctionnellement couplée à une broche d'entrée d'invalidation (A-REC) du circuit intégré (IC) quand une certaine valeur de tension de seuil est dépassée, un comparateur à hystérésis (COMP), **caractérisé en ce qu'**il comprend en outre:
une chaîne d'écrêtage de tension pouvant être coupée (Z2, Z3, Z4, Z5) connectée entre un autre noeud de sortie (Vcc) dudit circuit (D1, C1) et un noeud de masse commun du circuit ;
un diviseur de tension (R2, R3, R4) fournissant une première tension et une seconde tension à partir de la tension régulée (Vreg) ;
le comparateur à hystérésis (COMP) ayant une entrée inverseuse (-) couplée au diviseur de tension pour recevoir la première tension et une entrée non inverseuse (+) couplée par la broche d'entrée d'invalidation à ladite au moins une ligne externe, la sortie du comparateur commandant un premier transistor à hystérésis (M1) ayant des bornes de courant couplées à la seconde tension et au noeud de masse commun, respectivement, et un second transistor (M2) coupant la chaîne d'écrêtage en court-circuitant à la masse une partie de ses composants (Z4, Z5);
au moins une porte logique (NON ET) ayant une entrée couplée fonctionnellement par l'intermédiaire d'un étage inverseur à la sortie du comparateur à hystérésis (COMP), et une sortie pour fournir un signal d'ordre logique de désactivation quand le seuil est dépassé ;
la ligne de détecteur externe étant polarisée par une broche dédiée à ladite tension régulée (Vreg).

2. Système selon la revendication 1, **caractérisé en ce que** le détecteur appartient à un groupe comprenant des résistances non-linéaires à coefficient de température négatif, des résistances à coefficient de température positif, des commutateurs bilames, des thermocouples, des photorésistances, des phototransistors, des détecteurs sonores, des microcommutateurs, des détecteurs de fumée, et des détecteurs de vapeur ou de gaz.

3. Système sur la revendication 1, **caractérisé en ce que** le convertisseur constitue une alimentation à découpage connectable directement au secteur et ayant une topologie appartenant au groupe constitué des convertisseurs flyback quasi résonnants, des convertisseurs directs quasi résonnants, des convertisseurs flyback assymétriques en demi-pont, des convertisseurs directs assymétriques en demi-pont, des convertisseurs push-pull à décalage de phase en pont complet, des convertisseurs push-pull à commutation au zéro de tension en pont complet.

4. Procédé de désactivation d'une façon autoréactivable d'un convertisseur comprenant un circuit intégré (IC) contenant des circuits de programmation, d'excitation, de commande et de protection du convertisseur, un circuit (D1, C1) alimentant le circuit intégré (IC) à une tension régulée (Vreg), au moins une ligne externe et un détecteur (NTC, Rs) connecté à celui-ci pour une quantité électrique ou physique à surveiller, ladite au moins une ligne externe étant polarisée à une tension de référence et fonctionnellement couplée à une broche d'entrée de désactivation (A-REC) du circuit intégré (IC) quand une certaine valeur de seuil est dépassée, un comparateur à hystérésis (COMP), comprenant des étapes suivantes :
utiliser la tension régulée (Vreg) du convertisseur en tant que tension de polarisation de la ligne de détecteur externe de la quantité électrique ou physique à surveiller et en tant que tension de référence du comparateur à hystérésis (COMP) surveillant le signal représentant la quantité surveillée produite par la ligne de détecteur externe ;
à la suite de la commutation du comparateur, invalider le convertisseur (IC) et réduire la valeur limite de tension (Vcc) par le circuit (D1, C1) autoalimentant le circuit convertisseur (IC) en court-circuitant à la masse une partie (Z4, Z5) d'une chaîne d'écrétage de tension interruptible (Z2, Z3, Z4, Z5) connectée à la sortie (Vcc) dudit circuit (D1, C1) et à un noeud de masse commun du circuit.
